# EUROPEAN PATENT SPECIFICATION

(11) **EP 1 393 677 B1**
(45) Date of publication and mention of the grant of the patent: **01.03.2006**
(21) Application number: 01997257.9
(22) Date of filing: 27.11.2001
(51) Int. Cl.: A61B 5/107, G06Q 10/00

(54) **INFORMATION POINT WITH VERTICAL SCREEN DISPLACEMENT**
INFORMATIONSSTELLE MIT VERTIKALER BILDSCHIRMVERSCHIEBUNG
POINT D'INFORMATION AVEC DÉPLACEMENT VERTICAL D'ÉCRAN

(30) Priority: 27.11.2000 ES 200002836
(43) Date of publication of application: 03.03.2004
(73) Proprietor: Ceballos Counago, Antonio Manuel, 41010 Sevilla (ES)
(72) Inventor: Ceballos Counago, Antonio Manuel, 41010 Sevilla (ES)
(74) Representative: Urizar Anasagasti, José Antonio
(86) International application number: PCT/ES2001/000461
(87) International publication number: WO 2002/041778

(56) References cited:
- EP-A1- 0 872 808
- WO-A2-98/40826
- PATENT ABSTRACTS OF JAPAN & JP 06 044 444 A (HITACHI LTD) 18 February 1994
- PATENT ABSTRACTS OF JAPAN & JP 07 067 857 A (KUSUMI SHIMIZU) 14 March 1995

## Description

### Object of the invention

The object of the present invention is related to an ergonomic thematic tourist information point or centre, by situating interactive terminals connected by network in strategic positions, with all information of any kind, and with the characteristics of a "universal interface", as well as vertical screen movement, which includes the possibility of easy access for all sorts of people, of different height, age and physical disabilities, generating an accessible service to any kind of persons who may come to receive information.

The present invention includes a computer system that can save and provide any kind of information, as well as sending information or messages from the information point to any other receiver. Where any user may leave a message for another person, as well as sending an e-mail message, etc.

This strategic information point can be used as a thematic tourist item at strategic locations, streets, squares, lounges, conventions, public institutions, companies, hotels, etc.

As well as a buying-selling point for products and/or services, catalogue support, etc.

### Parts and physical support that make up the thematic ergonomic tourist information point

Screen with tactile feature and automatic movement, as well as the choice of being manual.

Vertical mobile elements or support guides which facilitate vertical movement of the screen, as well as manual adjustment of the height of the screen in direct proportion to the height of the person that is going to receive information.

The design of the support structure is innovative and has no barriers for persons with any disability.

Height and presence sensors.

Self-cooling housing for the computer, control and security system.

System for anchoring to floor by way of air pressure, attached to the metal structure.
The information point assembly and support is provided with a mirror, located on its upper concave area, as an eye-catcher and distance visibility provider.

### Background of the invention

At present a variety of information points or machines with similar content are on the market, but they do not provide for certain ergonomic matters, such as the different heights of the users (from short persons to very tall ones), who need screens that are adjusted to people's height, in order to see and operate them comfortably, as well as disabled persons access (in wheelchairs), who generally cannot gain access to seeing the screen or encounter frames or other barriers which prevent them from approaching the information point machine. The blind, who cannot access information unless the system avails of a voice processor, etc. In order to solve this access problem for the disabled, low height machines have been created, which seem to be specifically designed for the disabled, but which are not operable by normal or very tall persons.

On the other hand, the existing machines are not connected to a central network from which information can be updated or modified, without technical assistance by a technician at each information point, but rather consist of a portable computer on a pedestal with a tactile screen (much more expensive to install and maintain).

From the point of view of holding them to the ground, the anchoring elements of these machines normally damage it, or else, in absence of authorisation from the owner of the land, approval must be sought from other sources.

Among the machines of this kind on the market, some lack printing elements, and those that do have them, as well as increasing costs, have the drawback of lacking paper in many cases.

At the information points presently on the market, a one-piece tactile screen, as a single element, is normally installed, which makes the product more expensive when due to usage or breakdown the tactile element must be replaced.

From the orientation analysis for establishing and comparing the invention with the state of the art, some of the innovations of the sector for this sort of information are listed below.

An analysis of the competition has been carried out, by way of search on an information media such as the Internet.

The motivations for using the world wide web as a comparative instrument is a logical conclusion, these kiosks or information points are the development of new technology, and thus they should be present on the Internet.

In this analysis of the competition, we offer some comments on companies that produce the same information but which do not avail of the innovations provided by our invention.

Touchscreens company, of the U.S.A., is one of the biggest companies in the world for tactile screens, information points or interactive kiosks, and are not adapted to disabled persons.

NCR Company produces models including a portable computer, with a stand and tactile screen, oriented to buying in supermarket areas.

The models found in Spain, and especially those located in official institutions, do not provide an optimal viewing angle, nor an independent computer system, are not connected to a network, nor are they appropriate for disabled persons, since they include a step which is a barrier for the disabled. Guides are included on them, which do not have the function of screen movement but rather allow a printing element to be attached.

Model TK400, in spite of its design, is nevertheless static and rigid, and the lower bar is a barrier for the disabled.

JP 06-044444-A discloses a transaction apparatus that can adapt its input/output devices to the height of the customer. The apparatus includes a customer presence sensor and a customer height sensor.

### Description of the invention

The invention consists in an ergonomic thematic tourist information point, which provides users with a setup comprising:
a support structure (6) of the information point, situated in strategic positions, where interactive terminals connected to a network are positioned, with information of any kind, and with the characteristics of a "universal interface";
said support structure having support guide columns (2) which facilitate vertical movement of a touch screen (1), to provide comfortable access for all sorts of people of different height, age, and physical disability, generating an easy-to-use service for any person that comes to receive information;
said interactive terminal including solid state hard drives, so that the operating system is stored on chips in such a way that the activation of the system is carried out in real time, allowing it to store and give information as well as send messages such as e-mails from the information point;
said support structure including a circular shaped reflecting-mirror element (7), this mirror being situated on the upper part of said support structure, facilitating seeing the screen from a distance even if other persons are using it.

Embodiments of the present invention will be described below.

An embodiment of the present invention comprises two "sensors". A presence sensor or alarm, for offering attention to the persons who approach the information point within a detectable area (it measures electrical differences in the atmosphere) to detect and immediately activate an alarm mechanism or presence by sound or voice, inviting the user to approach and use the information point. The other sensor, which automatically measures the height of the person once they have approached the machine and situates the mobile screen, by vertical movement on the lateral guides, at the appropriate height for the user, whether it be normal, lower, higher, disabled in wheelchair, or any other physical handicap, etc.

This information point lacks steps and barriers which encourages disabled, wheelchair users and the like to approach it.

The "mobile screen" allows for the adjustment of its height by way of vertical (pneumatic) mobility elements, automatically once the height sensor is activated, or even alternatively in a manual mode, in case the sensor may not be functioning. To this effect, the screen is provided with a structure or design in the shape of a handle on its lower edge, for manual holding and pushing.

The mobile screen can be made up of two parts and physical components, a solid metal structure, within which the tactile monitor is introduced and a plastic, (recyclable) injectable one, so that the screen is separate from the tactile element in order to reduce costs. It will suffer breakdown before the screen itself does, therefore only the tactile element need be replaced, since in the state of the art, the installation of a whole tactile screen is necessary on the market, which increases repair or substitution costs enormously in case of breakdown.

The incorporation of a voice computer system for the blind and other physical disabilities that do not permit the use of the tactile screen.

The information is controlled and depends on a network or Intranet connection, and from a central hub it can be updated or changed without the need for a technician to go to each of the information points to manipulate the machine (maintenance and information costs decrease, as well as simultaneous working and coordination at all of the information points).

A reflecting element (mirror) is included on the upper part of the machine, which works as a display and long-distance information (from a distance, the user can obtain information on the services the machine offers without approaching it, even if other persons are using it), as well as an eye-catching element, since the screen can be seen at a distance.

It includes a hidden system for anchoring it to the floor by air pressure, attached to the metal structure, which is preferably located on the lower back area within a metal structure which is accessed with a key, or a key and a code, as a security and control system reserved for use by authorised technicians only. Most of these machines have the drawback that they can be taken if they cannot be anchored to the ground, either due to damage that would occur to the ground itself, or due to the lack of permission from the owners of the place it is located in, or else because the anchoring elements are visible and can be manipulated. In order to prevent possible robbery and floor damage, the invention includes an innovative hidden anchoring and security system by way of installing air pressure elements (suction cups like those used for holding large sheets of glass) which remains hidden from the users, on its own structure and away from any possible manipulation (it works by vacuum absorption, automatically and optionally manually in case of lack of electrical current), being a simple an low-cost pneumatic system.

An embodiment according to the present invention carries out a reading and printing support, although it does not include a printer nor paper (since this would increase breakdown possibilities, permanent technical assistance for supplying paper, as well as user discomfort when paper is lacking as they cannot take away the printed information obtained). According to this embodiment, printing documents or information is carried out on UAP or UMTS (on mobile phones), so that the user can take information away on their own mobile phone, without needing to transport nor carry awkward pieces of paper, in accordance with the demands of tourists or visitors that obtain information at the point on the city or place being visited.

In order to complete the description that will be presented below, and to provide an improved understanding of the characteristics of the invention, the present account is accompanied by diagrams through whose figures the innovations and advantages of the invention can be better understood.

### Brief description of the drawings

Figure 1 shows a perspective view of the ergonomic thematic tourist information point.
Figure 2 shows a perspective conic projection view, showing in position (A) the height and presence sensors that facilitate vertical screen movement, and in position (B) the self-cooling housing for the control and security computer system, where the tactile screen has automatic vertical movement that is adapted by a sensor to the height of the user.
Figure 3 shows a front view of the ergonomic thematic tourist information point, where the person that is receiving information is located, as well as the mirror located on the upper concave area of the support structure, which serves as an distance visibility provider and eye-catcher.
Figure 4 shows a top and profile view of the support structure of the ergonomic thematic tourist information point.

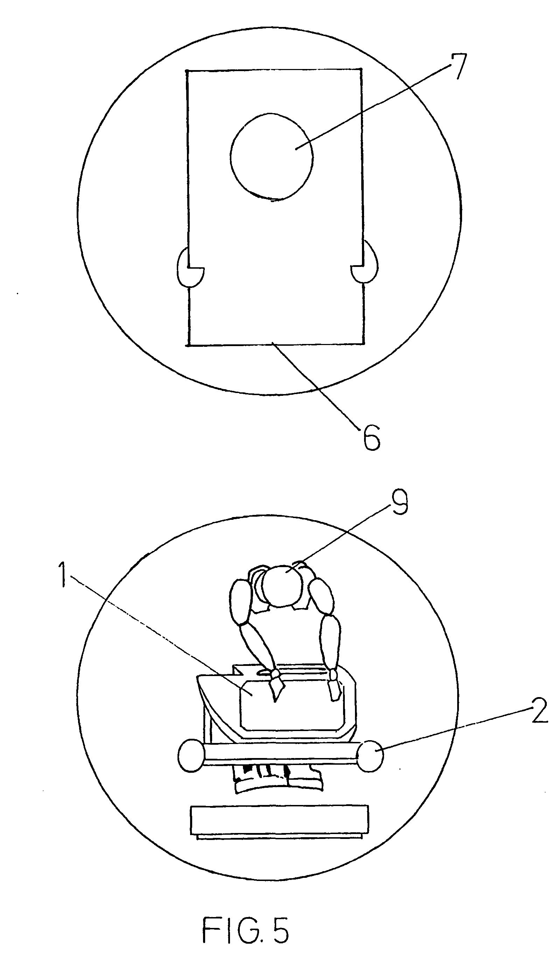

Figure 5 shows the plane positioning of the support structure of the ergonomic thematic tourist information point.
Figure 6 shows the anchoring system, where the air pressure elements attached to the metal structure are indicated.

### Preferred embodiment of the invention

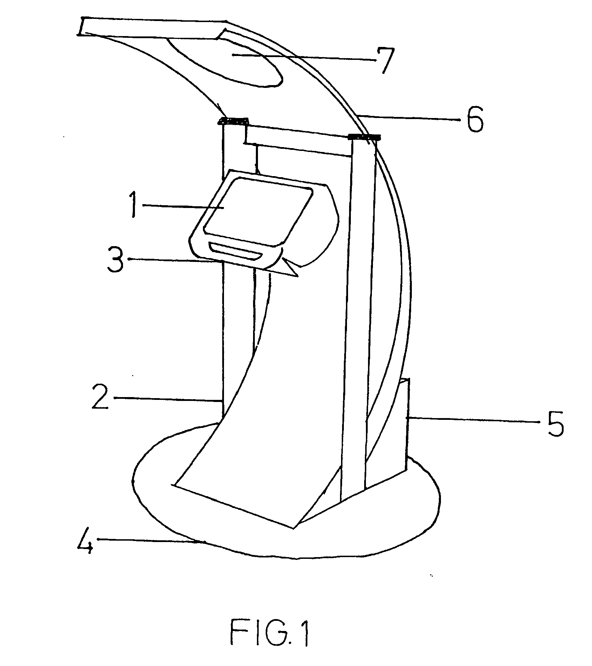

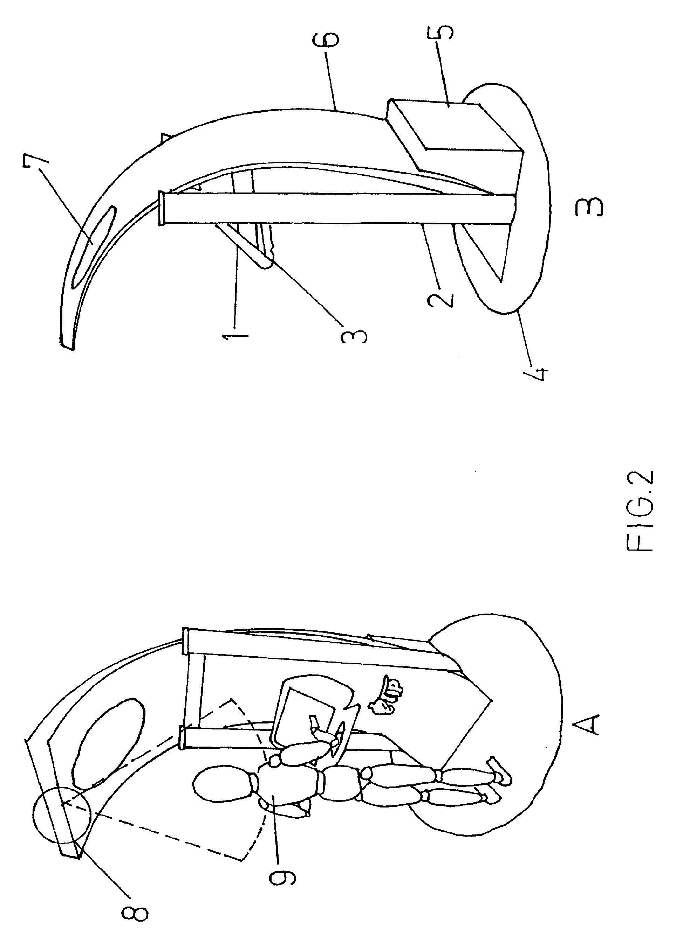

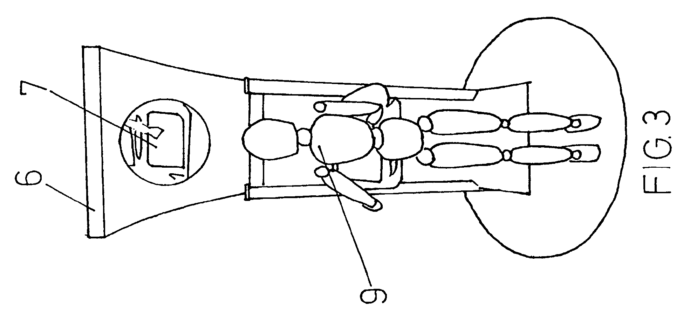

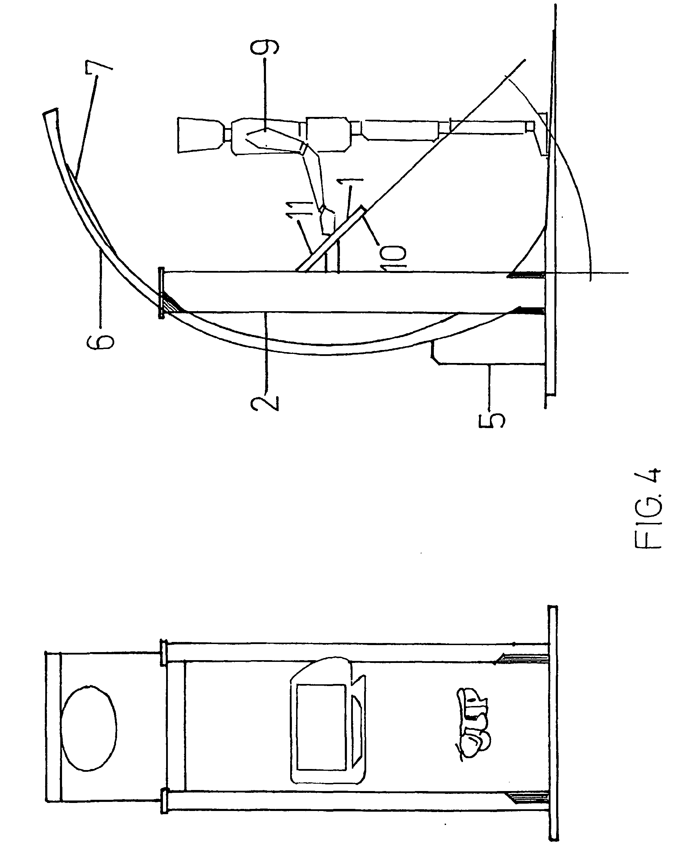

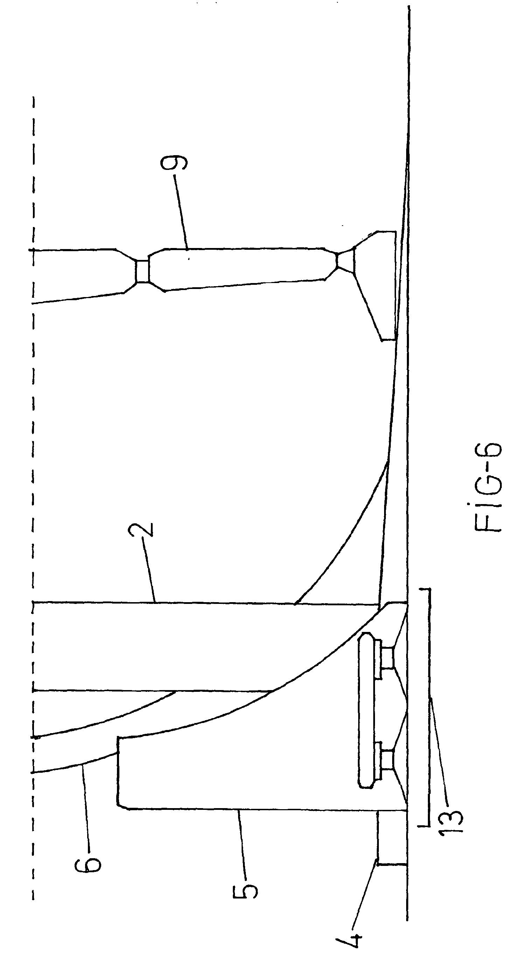

The present preferred practical embodiment of the invention, the ergonomic thematic tourist information point, consists of the mobile screen as shown in fig. 1 and in fig. 4, where the screen positioning (1), and user position (9) are shown in front of the tactile element which has the plastic covering (11), the whole assembly carrying out automatic vertical movement. The general inner structure is consolidated by support guide columns (2), which facilitate the sliding of the display screen assembly. The screen (1) on its salient part, includes a handle (3) as shown in fig.2. The arched or concave structure (6) is sustained by the support base (4), being attached to the ground, see fig. 1. On the support base of the structure, the structure which houses the self-cooling equipment for the control and security computer system as shown in figures 1 and 2, position (B). On the arched or concave support (6) of the structure of the information point, and on its upper area, a mirror (7) is lodged, see figures 1 and 3, being a distance visibility provider and eye-catcher. On the upper salient part of the arched structure (6), the sensors (8) are located, as shown in figure 2, position (A), the function of which is to determine the height of the user as well as their presence. The user position (9) before the mobile screen, once the sensors have worked as shown in fig. 2 position (A) and figures 3 and 4. The screen (1) is protected by a plastic upper covering (11) and a metal lower covering (10), shown in figure 4. The vertical mobile screen (1) on the columns (2) of the structural assembly of the information point is oriented at an angle (a) of 44 degrees, as shown in figure 4, this being the appropriate angle for screen-user positioning. The structural assembly that makes up the information point is sustained by the platform (4) and metal housing (5) at its base, where the air pressure elements (13) are located, anchored and hidden within said housing, which sustain and anchor the whole structure, as shown in fig. 6.

The elements that make up the information point have very specific functions, such as the sensors, a presence sensor for detecting presence and activating the alarm or presence mechanism by sound or voice. The height sensor, which, once the person has approached the machine, measures their height and automatically situates the screen by vertical movement along the lateral guides. The mobile screen, which facilitates the regulation of its height by way of vertical (pneumatic) elements. The mobile screen is made up of two parts and physical components, a solid metal structure, within which the tactile monitor is introduced, and an injectable (recyclable) plastic one, so that the screen is separated from the tactile element, the objective of which being to reduce costs. It includes a voice computer system for the blind and other physically disabled persons who cannot operate the tactile screen. The information is controlled and depends on a network or Intranet connection, and from a central unit it can be changed or updated without need for a technician to go to each of the information points to manipulate the machines. It includes a reflecting element (mirror) on the upper part of the assembly that works as a distance visibility and information provider. It includes a system for anchoring it to the ground by way of air pressure elements attached to the metal structure, located on the rear lower area, within a metal structure to which access is gained by key or by encoded key, as a security and control system. These pressure elements work by automatic, and optionally manual, vacuum absorption.

An embodiment according to the present invention constitutes a reading and printing support, although it does not have incorporated any printer or paper. The printing of documents or information is carried out in the system by UAP or UMTS (on mobile phones), so that the user can carry the information with them on their own mobile phone.

Having sufficiently disclosed the nature of the present invention, as well as the method for putting it into practice, it only remains to be added that it is possible to introduce variations, in the whole or its parts, in the shape, materials and disposal, provided that said variations do not substantially alter the characteristics of the invention that are claimed below.

## Claims

1. Ergonomic thematic tourist information point, which provides users with a setup comprising:
a support structure (6) of the information point, situated in strategic positions, where interactive terminals connected to a network are positioned, with information of any kind, and with the characteristics of a "universal interface";
said support structure having support guide columns (2) which facilitate vertical touch screen (1) movement, to provide comfortable access for all sorts of people of different height, age, and physical disability, generating an easy-to-use service for any person that comes to receive information;
said interactive terminal including solid state hard drives, so that the operating system is stored on chips in such a way that the activation of the system is carried out in real time, allowing it to store and give information as well as send messages such as e-mails from the information point;
said support structure including a circular shaped reflecting-mirror element (7), this mirror being situated on the upper part of said support structure, facilitating seeing the screen from a distance even if other persons are using it.

2. Ergonomic thematic tourist information point according to Claim 1, **characterised in that** said support structure (6) includes two sensors (8) for detecting the presence and height of an user and, having detected a user presence, issuing an alarm signal by means of a sound or voice in order to capture the user's attention.

3. Ergonomic thematic tourist information point according to Claim 1, **characterised in that** said support structure (6) is supported on a platform (4) and the support structure is designed without steps or barriers.

4. Ergonomic thematic tourist information point according to Claim 1, **characterised in that** said vertical touch screen (1) movement is achieved automatically by means of pneumatic mobility elements or manually actuating on a handle (3) of the touch screen (1) which is slid along two guiding columns (2).

5. Ergonomic thematic tourist information point according to Claim 1, **characterised in that** the touch screen (1) is protected by a plastic upper covering (11) and a metal lower covering (10).

6. Ergonomic thematic tourist information point according to Claim 1, **characterised in that** said interactive terminal further includes a voice computer system.

7. Ergonomic thematic tourist information point according to Claim 1, **characterised in that** said information is controlled and depends on a network or Intranet connection and may be changed or updated in a central unit.

8. Ergonomic thematic tourist information point according to Claim 1, **characterised in that** said support structure is anchored to the ground by means of vacuum cups (13) which are hidden and accessible through a key or keycode, the vacuum cups being operated either automatically by a pneumatic system or manually.

9. Ergonomic thematic tourist information point, according to Claim 7, **characterised in that** the programming base is OPC for industrial automata and robotics.

## Revendications

1. Point ergonomique d'information thématique touristique qui fournit aux utilisateurs d'un système comprenant :
une structure d'appui (6) du point d'information, situé dans de positions stratégiques, où des terminaux interactifs connectés à un réseau sont disposés, avec toute sorte de renseignements, et ayant les caractéristiques d'une « interface universelle » ;
ladite structure d'appui comprenant des colonnes guides d'appui (2) qui facilitent le mouvement vertical de l'écran tactile (1), pour procurer un accès confortable à toute sorte de personnes de différent poids, âge et incapacités physiques, devenant un service facile à utiliser pour toute personne venant requérir des renseignements ;
ledit terminal interactif comporte des unités dures en état solide, de façon que le système opérateur est sauvegardé dans de circuits intégrés de telle manière que l'activation du système est produit en temps réel, permettant recueillir et fournir des renseignements aussi bien qu'envoyer des messages, tels que des e-mails, à partir du point d'information ;
ladite structure d'appui comprenant un élément miroir réflecteur en forme circulaire (7), ce miroir étant placé sur la partie supérieure de ladite structure d'appui, permettant de visualiser l'écran à partir d'une certaine distance même si d'autres personnes sont en train de l'utiliser.

2. Point ergonomique d'information thématique touristique selon la revendication 1, **caractérisé en ce que** ladite structure d'appui (6) inclut deux capteurs (8) pour détecter la présence et le poids d'un utilisateur et, ayant détecté la présence d'un utilisateur, émet un signal d'alarme à travers d'un son ou d'une voix à l'objet d'attirer l'attention de l'utilisateur.

3. Point ergonomique d'information thématique touristique selon la revendication 1, **caractérisé en ce que** ladite structure d'appui (6) est portée par une plateforme (4) et la structure d'appui est dessinée sans marches ni barrières.

4. Point ergonomique d'information thématique touristique selon la revendication 1, **caractérisé en ce que** ledit mouvement vertical de l'écran tactile (1) est réussi automatiquement par des éléments de mobilité pneumatique ou par l'actuation manuelle sur un levier (3) de l'écran tactile (1), agencé tout au long de deux colonnes guide (2).

5. Point ergonomique d'information thématique touristique selon la revendication 1, **caractérisé en ce que** l'écran tactile (1) est protégé par un revêtement supérieur en plastique (11) et un revêtement inférieur en métal (10).

6. Point ergonomique d'information thématique touristique selon la revendication 1, **caractérisé en ce que** ledit terminal interactif inclut aussi un système informatique à voix.

7. Point ergonomique d'information thématique touristique selon la revendication 1, **caractérisé en ce que** lesdits renseignements sont contrôlés et dépendants d'une connexion network ou intranet pouvant être modifiés ou mis à jour par un centre serveur.

8. Point ergonomique d'information thématique touristique selon la revendication 1, **caractérisé en ce que** ladite structure d'appui est fixée au sol par des ventouses mobiles (13) qui sont cachées et accessibles par une clé ou une clé codifiée, les ventouses mobiles sont mises en marche automatiquement par un système pneumatique ou manuel.

9. Point ergonomique d'information thématique touristique selon la revendication 7, **caractérisé en ce que** la programmation de base est l'OPC pour l'industrie automate et robotique.

## Patentansprüche

1. Ergonomischer Thematik-Touristeninformationspunkt, dank welchem dem Benutzer eine Einrichtung mit folgenden Bestandteilen zur Verfügung steht:
Trägergestell (6) des Informationspunkts, welcher an strategischen Orten aufgestellt wird, wobei die interaktiven, in ein Netzwerk integrierten Terminals, die Informationen unterschiedlichster Art bereitstellen und die Merkmale einer "Universalschnittstelle" aufweisen, auf dem besagten Gestell befestigt werden;
das besagte Trägergestell mit Führungsschienen (2) ausgestattet ist, um die senkrechte Verschiebung des Tastbildschirms (1) zu erleichtern und somit Personen mit unterschiedlicher Körpergröße, unterschiedlichen Alters und eingeschränkter Bewegungsfähigkeit eine komfortable Bedienung desselben zu ermöglichen, wodurch allen Menschen, die Informationen erhalten möchten, eine Dienstleistung mit einfacher und bequemer Handhabung geboten werden kann;
in dem besagten interaktiven Terminal ein kontaktloses Festplattenlaufwerk integriert ist, dank welchem das Betriebssystem so auf Chips gespeichert ist, dass die Aktivierung des Systems in Echtzeit erfolgt, wodurch der Informationspunkt nicht nur Informationen speichern und anzeigen, sondern auch Nachrichten wie beispielsweise E-Mails versenden kann;
das besagte Trägergestell zudem mit einem runden Spiegelelement (7) versehen ist, welches im oberen Bereich des besagten Trägergestells angebracht ist, wodurch der Bildschirm auch von Menschen in den hinteren Reihen eingesehen werden kann, insofern dieser von anderen Personen betätigt wird.

2. Ergonomischer Thematik-Touristeninformationspunkt gemäß Patentanspruch 1, **dadurch gekennzeichnet, dass** das besagte Trägergestell (6) mit zwei Sensoren (8) ausgestattet ist, welche die Gegenwart und Körpergröße des jeweiligen Benutzers erfassen und nach einer derartigen Erkennung ein Wamsignal in Form eines Tons oder einer Ansage abgeben, um die Aufmerksamkeit des Benutzers auf sich zu lenken.

3. Ergonomischer Thematik-Touristeninformationspunkt gemäß Patentanspruch 1, **dadurch gekennzeichnet, dass** das besagte Trägergestell (6) auf einer Plattform (4) befestigt ist und das Trägergestell barrierefrei sowie ohne Stufen konzipiert ist.

4. Ergonomischer Thematik-Touristeninformationspunkt gemäß Patentanspruch 1, **dadurch gekennzeichnet, dass** die besagte senkrechte Verschiebung des Tastbildschirms (1) entweder anhand eines Pneumatikmechanismus automatisch erfolgt oder mithilfe der Betätigung eines Griffs (3), welcher sich am Tastbildschirm (1) befindet und mittels welchem sich dieser entlang zweier Führungsschienen (2) hinauf und hinunter bewegen lässt, manuell erzielt wird.

5. Ergonomischer Thematik-Touristeninformationspunkt gemäß Patentanspruch 1, **dadurch gekennzeichnet, dass** der Tastbildschirm (1) mit einer schützenden Umhausung versehen ist, die sich aus einer Plastikabdeckung (11) im oberen Bereich sowie einer Metallverkleidung (10) im unteren Bereich zusammensetzt.

6. Ergonomischer Thematik-Touristeninformationspunkt gemäß Patentanspruch 1, **dadurch gekennzeichnet, dass** der im besagten interaktiven Terminal integrierte Computer darüber hinaus mit einem Sprachsystem ausgestattet ist.

7. Ergonomischer Thematik-Touristeninformationspunkt gemäß Patentanspruch 1, **dadurch gekennzeichnet, dass** die besagte Information von einem Netzwerk- oder Intranetanschluss überwacht wird sowie von diesem abhängig ist und darüber hinaus über einen zentralen Server modifiziert oder aktualisiert werden kann.

8. Ergonomischer Thematik-Touristeninformationspunkt gemäß Patentanspruch 1, **dadurch gekennzeichnet, dass** das besagte Trägergestell mithilfe von Vakuummanschetten (13) am Boden fixiert ist, die versteckt sind, auf welche man sich jedoch mit einem Schlüssel oder Schlüsselcode Zugriff verschaffen kann, wobei sich die Vakuummanschetten entweder automatisch, mittels eines Pneumatiksystems, oder manuell betätigen lassen.

9. Ergonomischer Thematik-Touristeninformationspunkt gemäß Patentanspruch 7, **dadurch gekennzeichnet, dass** dieser mit der OPC-Programmiergrundlage für Industrieautomatismen und -robotik arbeitet.
